Europäisches Patentamt

European Patent Office

Office européen des brevets

(19)

(11) Numéro de publication : **0 105 781**
**B1**

(12) **FASCICULE DE BREVET EUROPÉEN**

(45) Date de publication du fascicule du brevet :
21.01.87

(51) Int. Cl.⁴ : **G 21 D   5/08**, F 22 B   1/06

(21) Numéro de dépôt : **83401833.5**

(22) Date de dépôt : **20.09.83**

(54) **Circuit caloporteur secondaire pour un réacteur nucléaire refroidi par un métal liquide et générateur de vapeur adapté à un tel circuit.**

(30) Priorité : **22.09.82 FR 8215959**

(43) Date de publication de la demande :
**18.04.84 Bulletin 84/16**

(45) Mention de la délivrance du brevet :
**21.01.87 Bulletin 87/04**

(84) Etats contractants désignés :
**BE DE GB IT NL**

(56) Documents cités :
**EP-A- 0 014 662
FR-A- 2 270 661
FR-A- 2 509 841
US-A- 3 628 507**

(73) Titulaire : **COMMISSARIAT A L'ENERGIE ATOMIQUE
Etablissement de Caractère Scientifique Technique
et Industriel
31/33, rue de la Fédération
F-75015 Paris (FR)**

**NOVATOME
20 Avenue Edouard Herriot
F-92350 Le Plessis Robinson (FR)**

(72) Inventeur : **Brachet, Alain
34, Avenue Saint Laurent
F-91400 Orsay (FR)**
Inventeur : **Figuet, Jacques
c/o NOVATOME Sce Essais Centrale Cremasville
B.P. 37 F-38510 Morestel (FR)**
Inventeur : **Guidez, Joel
Lotissement Les Grands Pins
F-30330 Connaux (FR)**
Inventeur : **Lions, Noel
233 Montée de toutes Aures
F-04100 Manosque (FR)**
Inventeur : **Traiteur, René
19 rue des capucines
F-91130 Ris-Orangis (FR)**
Inventeur : **Zuber, Thierry
120 rue de Javel
F-75015 Paris (FR)**

(74) Mandataire : **Mongrédien, André et al
c/o BREVATOME 25, rue de Ponthieu
F-75008 Paris (FR)**

EP 0 105 781 B1

## Description

La présente invention concerne un circuit caloporteur secondaire pour un réacteur nucléaire refroidi par un métal liquide tel que du sodium, ainsi qu'un générateur de vapeur particulièrement adapté à un tel circuit.

Dans l'état actuel de la technique, les centrales nucléaires à neutrons rapides comprennent habituellement un circuit primaire dans lequel le sodium extrait la chaleur produite par les élé-ments combustibles du cœur pour la transporter jusqu'à un échangeur de chaleur dans lequel il cède sa chaleur à du sodium contenu dans un circuit caloporteur secondaire. Le sodium chaud sortant de l'échangeur dans ce circuit secondaire transporte la chaleur jusqu'à un générateur de vapeur dans lequel il cède à son tour sa chaleur à de l'eau sous pression contenue dans un circuit caloporteur tertiaire alimentant en vapeur une turbine afin de produire de l'électricité.

Selon une conception dite de réacteur intégré, le circuit caloporteur primaire - est intégré en totalité dans une cuve contenant à la fois le cœur du réacteur, les échangeurs et les pompes de circulation du circuit primaire, ainsi que l'ensemble du sodium liquide contenu dans ce circuit. Les échangeurs de chaleur étant au nombre de trois ou quatre, le circuit caloporteur secondaire, externe à la cuve du réacteur, est divisé le plus souvent en trois ou quatre boucles identiques. Il en est de même du circuit caloporteur tertiaire.

Dans les centrales nucléaires à neutrons rapides réalisées actuellement, l'existence d'un circuit caloporteur secondaire se justifie par la nécessité de confiner avec une grande sûreté le sodium primaire radioactif et parce qu'il est essentiel de protéger le circuit primaire des répercussions éventuelles d'une fuite de la surface d'échange thermique du générateur de vapeur.

En effet, dans une telle éventualité, de l'eau ou de la vapeur sous haute pression entre en contact avec le sodium. La réaction chimique qui se produit alors est très exothermique et libère des produits de réaction corrosifs et dangereux (soude caustique, hydrogène). Il convient donc de protéger le cœur, c'est-à-dire le circuit primaire, des contrecoups possibles de cette réaction sodium/eau (surpression, pollution par la soude).

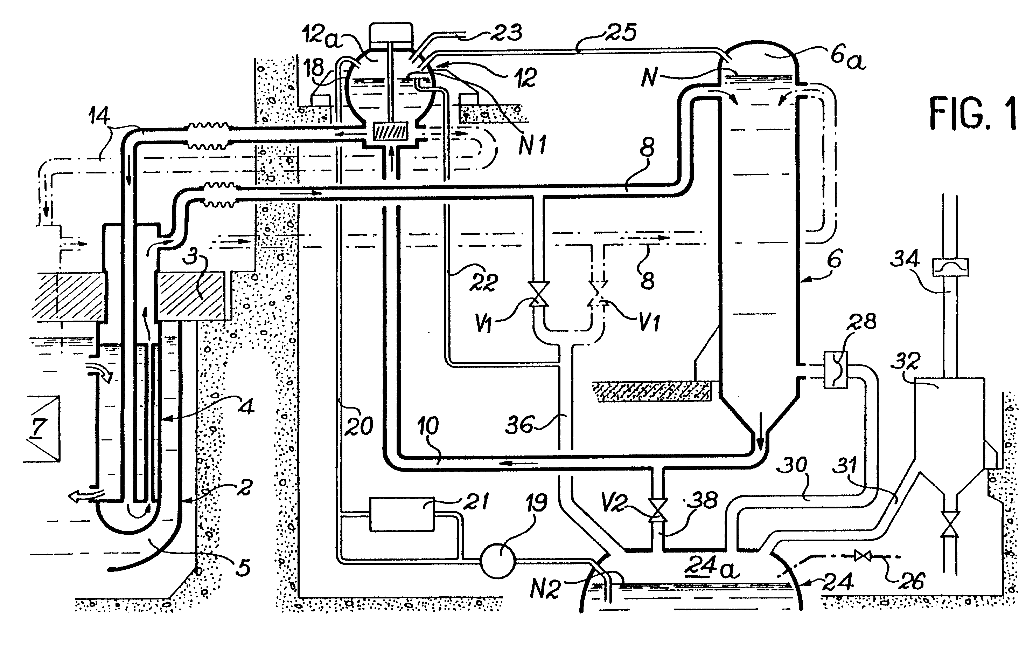

Sur la figure 1, on a représenté la structure habituelle d'une boucle secondaire de refroidissement d'un réacteur nucléaire à neutrons rapides. Cette boucle comprend, dans l'exemple de réalisation représenté en trait plein, un échangeur de chaleur 4. Bien entendu, comme on l'a représenté en traits mixtes, la boucle secondaire peut aussi comprendre un deuxième échangeur de chaleur. Les échangeurs 4 sont disposés dans la cuve 2 obturée par une dalle 3 et contenant le cœur 7 du réacteur et l'ensemble du circuit caloporteur primaire. En particulier, la cuve 2 est remplie de sodium liquide 5. La sortie de chaque échangeur 4 est raccordée à un générateur de vapeur 6 par une conduite aller 8. Le générateur de vapeur comporte à sa partie supérieure une poche d'argon 6a qui définit un niveau libre N de sodium. La sortie du générateur de vapeur 6 est raccordée par une conduite 10 à l'orifice d'aspira-tion d'une pompe de circulation 12 dont chaque orifice de refoulement est raccordé par une conduite 14 à l'entrée d'un échangeur 4.

Dans une telle boucle secondaire de refroidissement de conception classique, l'étanchéité de la traversée de l'arbre de la pompe est réalisée au moyen d'une garniture mécanique qui est au contact d'un gaz neutre tel que de l'argon interposé entre le sodium et la garniture. A cet effet, la surface libre N1 du sodium est surmontée d'une poche d'argon 12a. De plus, le rotor de la pompe est placé dans un réservoir d'expansion 18 dont la taille est suffisante pour absorber sans noyage de la garniture toutes les augmentations envisageables du volume de sodium dans la boucle secondaire (par dilatation thermique). Enfin, afin d'éviter tout risque de noyage de la garniture qui pourrait intervenir en cas de fuite de l'argon surmontant le sodium dans le réservoir 18, celui-ci est placé au point le plus haut du circuit.

Une conduite 20 d'appoint en sodium relie un réservoir de stockage 24 placé à la partie inférieure de l'installation à la partie supérieure du réservoir 18. Cette conduite 20 est équipée d'une pompe de circulation 19 et d'un système de purification 21 du sodium. Elle permet notamment de compenser une fuite éventuelle de la vanne de vidange V2 qui est située dans la conduite de vidange 38 de la conduite 10. Dans le sens inverse, toute montée intempestive du niveau libre N1 du sodium dans le réservoir 18 est compensée par une conduite de trop-plein 22 qui relie le réservoir 18 à la conduite 36 en dessous des vannes de vidange V1 situées dans les conduites de vidange 36 des conduites 8.

La pression d'argon dans le réservoir 18 est contrôlée par une tubulure d'admission 23. De même, le niveau libre N2 du sodium dans le réservoir 24 est surmonté d'un ciel d'argon 24a dont la pression est contrôlée par une tubulure 26. De plus, les ciels d'argon 6a et 12a du générateur et de la pompe communiquent par une conduite d'équilibrage 25 des niveaux N et N1 et des pressions.

Comme l'illustre toujours la figure 1, le réservoir 24 sert également à la récupération éventuelle des produits résultant d'une réaction sodium/eau en cas de fuite dans le générateur de vapeur 6. A cet effet, une conduite 30 relie la partie inférieure du générateur de vapeur 6 à la partie supérieure du réservoir 24. Cette canalisation est normalement obturée par des membranes d'éclatement 28, de grand diamètre, qui se rompent sous l'effet des surpressions dues à la réaction sodium-eau et permettent ainsi la décompression de la boucle secondaire. Dans ce cas, le réservoir 24 assure la séparation des produits liquides et gazeux résultant de la réaction sodium/eau. Toutefois, cette fonction peut être également assurée par un second séparateur 32, par exemple du type cyclone, communiquant avec le réservoir 24 par une conduite 31 et muni d'une cheminée de rejet 34 à l'atmosphère des seuls produits gazeux (hydrogène, argon, vapeur d'eau).

En complément à ces moyens permettant de récupérer les produits de la réaction sodium/eau pouvant se produire dans le générateur de vapeur, des moyens sont prévus pour amortir les chocs dans le circuit secondaire à l'amont et à l'aval du générateur de vapeur, afin que ceux-ci ne soient pas transmis jusqu'aux échangeurs de chaleur 4. A l'amont de la zone d'échange du générateur de vapeur 6, ces moyens sont constitués par la poche d'argon 6a formée à l'intérieur même du générateur de vapeur et à la partie supérieure de celui-ci. Cette poche d'argon 6a joue alors le rôle d'un réservoir tampon amont. A l'aval du générateur de vapeur, le réservoir tampon aval se confond avec le réservoir d'expansion 18 de la pompe, comportant le ciel d'argon 12a.

La boucle secondaire de la technique antérieure qui vient d'être décrite présente un certain nombre d'inconvénients qui résultent principalement de la nécessité de placer la pompe à la partie supérieure de l'installation et de la disposition du rotor de la pompe dans un réservoir d'expansion 18 de grande taille.

Ainsi, la position haute de la pompe place celle-ci dans de mauvaises conditions hydrauliques d'aspiration qui imposent d'adopter une faible vitesse de rotation, donc une roue de grand diamètre et un moteur d'entraînement lent pour éviter la cavitation. L'ensemble est encombrant et coûteux car on sait que le prix d'une pompe croît comme le carré de son diamètre. Parallèlement, le réservoir d'expansion entourant la pompe est lourd et coûteux. De plus, la conjugaison du poids de l'ensemble pompe-réservoir avec sa disposition en partie haute de l'installation nécessite une structure de supportage importante notamment pour remédier aux sollicitations sismiques éventuelles qui tendent à croître au fur et à mesure que l'on s'élève. En outre, compte tenu de l'implantation des différents éléments de la boucle et de la nécessité de pouvoir vidanger celle-ci par gravité, les tuyauteries équipant l'installation sont particulièrement longues et encombrantes. Enfin, la disposition du réservoir d'expansion est telle qu'il forme un système de vases communicants avec le générateur de vapeur. En cas de réaction sodium/eau dans ce dernier, il se produit alors des oscillations de grande amplitude que le réservoir d'expansion peut difficilement contenir.

Afin de remédier à ces inconvénients, on a proposé dans la demande de brevet européenne EP-A-10 014 662 de supprimer le réservoir d'expansion entourant la pompe et de placer celle-ci dans la partie basse de l'installation, juste au-dessus du réservoir de stockage. Cette solution est rendue possible en introduisant le réservoir de stockage dans la partie active de la boucle secondaire et en lui faisant jouer simultanément les rôles de réservoir anti-bélier aval et de réservoir d'expansion. Toutefois, elle nécessite d'équilibrer la pression de sodium dans la totalité de la boucle secondaire en plaçant le ciel d'argon surplombant le sodium dans le réservoir de stockage à une pression suffisante. En pratique, cette pression doit être d'environ trois bars relatifs.

Cette solution connue présente l'avantage de placer la pompe dans des conditions de fonctionnement hydraulique satisfaisantes, mais l'utilisation d'un réservoir de stockage pressurisé, muni de tuyauteries plongeantes conduit à accroître de façon importante les risques résultant de l'utilisation du sodium comme fluide de refroidissement. En particulier, en cas de fuite dans le circuit, les débits de fuite se trouvent sensiblement accrus, de même que les risques de feu de sodium pulvérisé. Parmi les autres inconvénients d'une telle solution, on citera aussi l'impossibilité d'isoler le réservoir de stockage du reste du circuit et l'existence de phénomènes transitoires délicats par inversion du sens du débit de fuite dans la pompe. De plus, il est certain que la multiplication des fonctions remplies par le réservoir de stockage rend particulièrement délicat le contrôle des phénomènes thermohydrauliques qui se produisent dans ce réservoir et du chargement thermomécanique correspondant.

Par ailleurs, on connaît du document US-A-3 628 507 un générateur de vapeur vertical à tubes droits comportant des chambres annulaires disposées autour de la zone d'échange et communiquant avec celle-ci, ces chambres contenant une poche de gaz sous pression.

La présente invention a précisément pour objet un circuit caloporteur secondaire ne présentant pas les inconvénients des circuits caloporteurs secondaires connus à ce jour.

A cet effet, il est proposé un circuit caloporteur secondaire de réacteur nucléaire à métal liquide, comprenant au moins un échangeur de chaleur logé dans la cuve du réacteur, un générateur de vapeur vertical extérieur à ladite cuve, une conduite aller reliant une tubulure de sortie de chaque échangeur de chaleur à au moins une tubulure d'entrée du générateur de vapeur, une conduite retour reliant au moins une tubulure de sortie du générateur de vapeur à une tubulure d'entrée de chaque échangeur de chaleur, une pompe de circulation d'un métal liquide secondaire contenu dans ledit circuit, disposée dans la conduite retour, un réservoir tampon amont disposé dans ledit circuit en amont de la zone d'échange du générateur de vapeur, et un réservoir de stockage du métal liquide secondaire jouant aussi le rôle d'un réservoir tampon aval, disposé en aval de la zone d'échange du générateur de vapeur, le générateur de vapeur comprenant une enveloppe externe à l'intérieur de laquelle est disposé le réservoir tampon amont, ce dernier définissant un premier niveau libre de métal liquide surmonté d'une première poche de gaz neutre au-dessus de la zone d'échange, dans la partie supérieure de l'enveloppe, des moyens étant prévus pour établir une première pression de gaz neutre simultanément dans le réservoir de stockage et dans le réservoir tampon amont caractérisé en ce qu'un réservoir tampon aval est également disposé à l'intérieur de l'enveloppe externe et définit un deuxième niveau libre de métal liquide surmonté d'une deuxième poche de gaz neutre, ce réservoir tampon aval étant de forme annulaire et situé en dessous de ladite zone d'échange, autour d'une zone de sortie du générateur par laquelle le métal liquide secondaire s'écoule vers le bas entre la zone d'échange et la tubulure de sortie du générateur de vapeur, le réservoir tampon aval communiquant avec ladite zone de sortie, des moyens étant prévus pour établir une seconde pression de gaz neutre au-dessus du niveau libre de métal liquide secondaire dans le réservoir tampon aval, cette seconde pression étant supérieure à la première.

Grâce à ces caractéristiques, le réservoir d'expansion peut être supprimé et la pompe peut être placée en partie basse sans qu'il soit nécessaire de placer le circuit sous une pression d'argon élevée et sans que le réservoir de stockage ne soit introduit dans la boucle secondaire proprement dite. Il en résulte notamment une diminution sensible de l'encombrement et du coût de l'installation, une amélioration de la protection des échangeurs de chaleur en cas de réaction sodium/eau dans le générateur de vapeur, et des conditions de fonctionnement satisfaisantes du point de vue de la sûreté (basse pression) ainsi que pour le fonctionnement de la pompe.

De plus, la forme annulaire du réservoir du tampon aval confère à l'interface métal liquide/gaz neutre, une grande surface qui limite les variations du niveau de métal liquide dans ce réservoir à une fraction réduite de la hauteur du générateur de vapeur. Il est ainsi possible de réaliser l'amortissement aval en dehors de la zone où sont situées les lyres de dilatation des tubes d'échange, ce qui limite le risque d'entrée en vibration de celles-ci.

Conformément à une première variante de réalisation de l'invention, la pompe de circulation est une pompe mécanique à aspiration axiale comportant un corps de pompe et un moteur commandant la rotation d'un rotor dans le corps de pompe par l'intermédiaire d'un arbre vertical traversant une garniture hydraulique solidaire du corps de pompe, le métal liquide secondaire définissant un niveau libre surmonté d'un ciel de gaz neutre dans la partie du corps de pompe située au-dessus de ladite garniture, ce ciel de gaz neutre étant relié auxdits moyens pour établir la deuxième pression de gaz neutre.

De préférence, le circuit caloporteur secondaire comprend alors, de plus, des moyens de régulation du niveau du métal liquide secondaire dans le corps de pompe, ces moyens de régulation comportant une canalisation d'alimentation reliant le réservoir de stockage à la conduite de retour en amont de la pompe principale, une canalisation d'évacuation reliant un trop plein formé dans le corps de pompe au-dessus de la garniture hydraulique au réservoir du stockage, et des moyens pour faire circuler en permanence le métal liquide secondaire dans lesdites canalisations d'alimentation et d'évacuation, afin de pouvoir fonctionner avec une fuite permanente de métal liquide secondaire au travers de la garniture hydraulique de la pompe vers le réservoir de stockage.

Conformément à une deuxième variante de réalisation de l'invention, la pompe de circulation est une pompe électromagnétique.

L'invention concerne également un générateur de vapeur prévu pour être utilisé dans un tel circuit, ce générateur étant du type comprenant une enveloppe externe d'axe vertical, au moins une tubulure d'entrée et au moins une tubulure de sortie du métal liquide secondaire, l'espace défini à l'intérieur de l'enveloppe étant divisé en une zone d'entrée de métal liquide communiquant avec la tubulure d'entrée, une zone de sortie de métal liquide communiquant avec la tubulure de sortie et une zone d'échange dans laquelle le métal liquide secondaire circule de haut en bas autour de tubes de circulation d'eau tertiaire entre la zone d'entrée et la zone de sortie, le générateur comprenant de plus un réservoir tampon amont formé par une première poche de gaz neutre remplissant l'extrémité supérieure de l'enceinte.

Selon l'invention, un tel générateur de vapeur est caractérisé par le fait qu'il comprend de plus un réservoir tampon aval, de forme annulaire, situé en dessous de ladite zone d'échange, communiquant avec la zone de sortie par au moins une ouverture formée à l'extrémité inférieure de sa cloison interne, et dont la partie supérieure étanche est remplie d'une deuxième poche de gaz neutre.

Conformément à un mode de réalisation particulier de l'invention, la zone de sortie de ce générateur est délimitée à l'intérieur d'une virole disposée coaxialement dans la partie inférieure de l'enveloppe externe, le réservoir tampon aval étant disposé autour de la virole de telle sorte que la partie inférieure de cette dernière forme la cloison interne de ce réservoir, l'extrémité inférieure de la virole se terminant à une distance donnée du fond de l'enveloppe pour définir ladite ouverture.

Selon une première variante, un passage annulaire est défini entre la cloison externe du réservoir tampon aval et l'enveloppe, de telle sorte qu'une circulation limitée de métal liquide secondaire s'établit dans l'espace annulaire délimité autour de la virole, au-dessus du réservoir tampon aval.

Selon une deuxième variante, la virole comporte au moins un passage au-dessus de la cloison supérieure du réservoir tampon aval, de telle sorte qu'une circulation limitée de métal liquide secondaire s'établit dans l'espace annulaire délimité autour de ladite virole, au-dessus du réservoir tampon aval.

On décrira maintenant, à titre d'exemples non limitatifs, différents modes de réalisation de l'invention en se référant aux dessins annexés dans lesquels :

la figure 1, déjà décrite, représente de façon schématique une boucle d'un circuit de refroidissement secondaire d'une centrale nucléaire à neutrons rapides réalisée selon la technique antérieure,

la figure 2 est une vue comparable à la figure 1 représentant une boucle d'un circuit de refroidissement secondaire réalisé conformément à l'invention,

la figure 3 représente une première variante de réalisation d'un générateur de vapeur prévu pour être utilisé dans le circuit de la figure 2, comportant un réservoir tampon aval disposé en partie basse, autour d'une virole acheminant le sodium liquide vers la tubulure de sortie,

la figure 4 est une vue comparable à la figure 3, illustrant une variante dans laquelle l'arrivée du sodium se fait par le bas du générateur de vapeur, et

la figure 5 est une vue comparable à la figure 3, illustrant une variante dans laquelle le réservoir tampon aval est implanté sur un générateur existant.

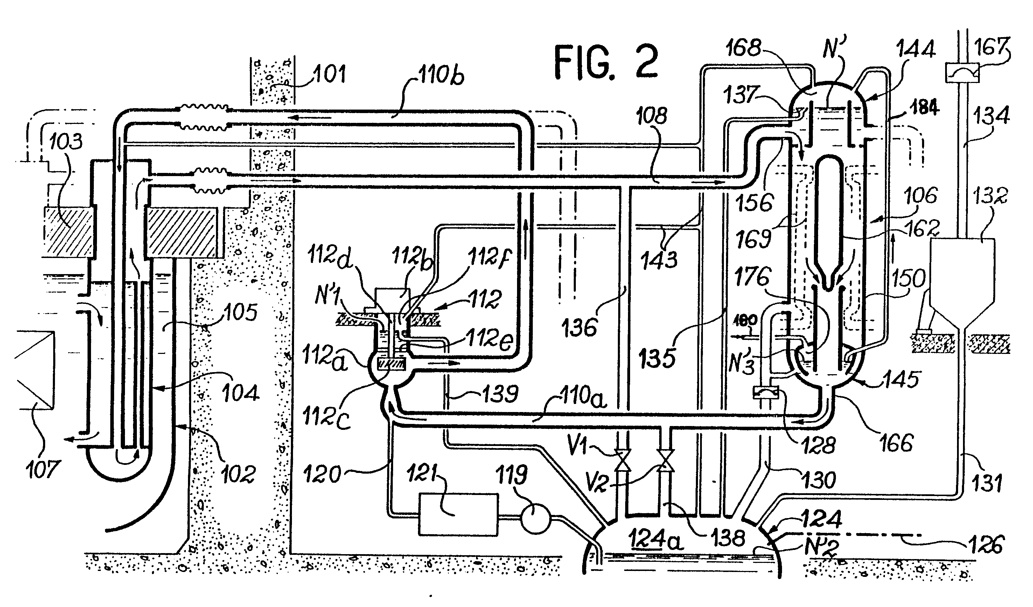

Sur la figure 2, on a représenté de façon simplifiée une boucle d'un circuit secondaire réalisé conformément à l'invention. On voit en particulier sur cette figure une partie du bâtiment réacteur 101, sur laquelle repose une dalle 103 supportant et obturant la cuve 102 du réacteur. Cette cuve 102 est remplie de métal liquide primaire 105 et elle contient de façon connue l'ensemble du circuit primaire du réacteur. En particulier, on a représenté sur la figure 2, à l'intérieur de la cuve principale 102, le cœur 107 du réacteur ainsi que l'un des échangeurs de chaleur 104 servant à transmettre la chaleur extraite du cœur par le sodium primaire 105 au sodium circulant dans le circuit secondaire. Généralement, les échangeurs de chaleur 104 sont suspendus à la dalle 103 de telle sorte que l'ensemble de la zone d'échange baigne dans le sodium primaire 105 et que seule la tête des échangeurs soit située au-dessus de la dalle.

A l'extérieur du bâtiment 101, la boucle secondaire représentée sur la figure 2 comprend principalement un générateur de vapeur vertical 106 et une pompe de circulation 112. La tubulure de sortie de la tête de l'échangeur 104 est reliée à la tubulure d'entrée 156 de sodium secondaire du générateur de vapeur 106 par une conduite aller 108. Le sodium secondaire ainsi introduit dans le générateur de vapeur circule à l'intérieur de l'enveloppe 150 jusqu'à une tubulure de sortie 166 située à l'extrémité inférieure de l'enveloppe. Au cours de ce trajet et comme on le verra plus en détail ultérieurement, le sodium secondaire chemine entre un grand nombre de tubes d'échange hélicoïdaux tels que 169 dans lesquels circule de bas en haut l'eau sous pression d'un circuit tertiaire eau/vapeur (non représenté). L'eau circulant dans ce dernier circuit se trouve ainsi vaporisée et entraîne des turbines commandant une génératrice de courant électrique.

Le sodium secondaire ainsi refroidi sort du générateur de vapeur 106 par la tubulure 166 et retourne par une conduite retour en deux parties 110a, 110b vers l'orifice d'entrée de la tête de l'échangeur 104. De façon plus précise, la partie 110a de la conduite retour fait communiquer la tubulure de sortie du générateur de vapeur avec l'orifice d'aspiration de la pompe hydraulique 112 à aspiration axiale et la deuxième partie 110b de la conduite retour fait communiquer l'orifice de refoulement de la pompe avec l'orifice d'entrée de la tête de l'échangeur 104.

Bien entendu, comme on l'a représenté en traits mixtes sur la figure 2, plusieurs échangeurs 104 peuvent être incorporés dans une même boucle du circuit secondaire. Le nombre des conduites 108 et 110b se trouve alors multiplié par ce nombre d'échangeurs.

Toujours de façon connue, le circuit secondaire comprend de plus un réservoir de stockage 124 disposé à la partie inférieure de l'installation de façon à pouvoir recevoir par gravité l'ensemble du sodium contenu dans le circuit secondaire. A cet effet, on relie le point bas de la conduite 108 au réservoir 124 par une conduite 136 et le point bas de la conduite 110a au réservoir 124 par une conduite 138, chacune des conduites 136 et 138 étant contrôlée par une vanne V1 et V2 respectivement.

Afin de permettre le remplissage du circuit secondaire lorsque le sodium est contenu en totalité dans le réservoir de stockage 124, on prévoit une canalisation d'alimentation 120 dont l'extrémité inférieure plonge dans le sodium contenu dans le reservoir 124 et dont l'extrémité supérieure débouche dans la conduite 110a, à proximité de l'orifice d'aspiration de la pompe 112. La circulation du sodium dans la canalisation 120 est réalisée au moyen d'une pompe 119, généralement de type électromagnétique. On prévoit en outre dans la canalisation 120 des moyens de purification 121 qui peuvent être constitués par exemple par un piège froid d'un quelconque type connu.

Le sodium contenu dans le réservoir de stockage 124 définit un niveau libre N'2 surmonté d'une poche de gaz inerte 124a tel que de l'argon. La pression de cette poche d'argon est régulée au moyen d'une canalisation 126, de façon à maintenir conformément à l'invention la pression d'argon dans le réservoir 124 à un niveau de basse pression, par exemple à environ 0,5 bar relatif, quel que soit le régime de fonctionnement.

De façon comparable, le sodium contenu dans l'enveloppe 150 du générateur de vapeur est surmonté d'une poche de gaz inerte 168 tel que de l'argon au-dessus de la zone d'échange proprement dite, de façon à définir un niveau libre N'. Ce niveau N' est compris entre deux niveaux, un niveau supérieur $N'_s$ correspondant au trop plein 137 et un niveau inférieur $N'_i$ situé au-dessus des tubulures d'entrée 156. La régulation du niveau libre s'effectue au moyen d'une canalisation 135 reliant le trop plein 137 disposé à l'intérieur de l'enceinte 150 du générateur de vapeur à la partie supérieure du réservoir 124.

Dans le mode de réalisation représenté sur la figure 2, la pompe 112 est une pompe mécanique comportant un corps de pompe 112a, un moteur d'entraînement 112b, et un rotor 112c entraîné par le moteur au moyen d'un arbre vertical 112d. L'arbre 112d traverse sensiblement à mi-hauteur du corps de pompe une garniture hydraulique 112e constituée par un labyrinthe autorisant une fuite contrôlée de sodium liquide depuis la partie active de la pompe constituée par le rotor situé en dessous de la garniture 112e vers la zone du corps 112a située au-dessus de cette garniture, tout en assurant une certaine isolation entre ces deux zones. Au-dessus de la garniture 112e, le sodium liquide définit un niveau libre N'1 surmonté d'une poche de gaz inerte 112f tel que de l'argon.

Le niveau N'1 est maintenu en permanence à une valeur sensiblement constante à la fois grâce à la canalisation 120 qui permet, par une mise en œuvre de la pompe 119, de pouvoir fonctionner avec une fuite de sodium permanente au travers de la garniture 112e, de façon à éviter tout dénoyage de la pompe, et au moyen d'une canalisation 139 qui relie un trop-plein disposé à l'intérieur du corps de pompe au réservoir 124. Compte tenu de la perte de charge existant au niveau de la garniture 112e, on réalise en outre un découplage entre le sodium contenu dans le circuit secondaire proprement dit et le sodium contenu dans le corps de pompe au-dessus de la garniture. Cette caractéristique importante de ce mode de réalisation de l'invention utilisant une pompe de type mécanique permet de placer celle-ci à n'importe quel niveau et notamment à un niveau relativement bas (voisin de celui de l'extrémité inférieure du générateur de vapeur) comme on l'a représenté sur la figure 2.

Le circuit composé de la canalisation d'alimentation 120 de la pompe 119 et de la canalisation de trop-plein 139, permet d'assurer la fonction expansion lente du sodium en utilisant la réserve de sodium contenue dans le réservoir de stockage 124.

Les atmosphères des grosses capacités que constituent les poches d'argon 124a du réservoir, 168 du générateur de vapeur et 112f de la pompe sont mises en équilibre de pression au moyen de canalisations de liaison 143. Lorsque la pression établie dans la poche d'argon du réservoir de stockage 124 est par exemple de 0,5 bar relatif, il en est donc de même de la pression régnant dans les poches d'argon du générateur de vapeur et de la pompe. Il est à noter que la basse pression qui est ainsi établie dans l'ensemble du circuit secondaire conformément à l'invention permet d'améliorer très sensiblement la sûreté de celui-ci tout en conservant pour la pompe 112 des caractéristiques hydrauliques particulièrement bonnes résultant de la disposition de celle-ci en un point relativement bas de l'installation.

Compte tenu de la suppression du réservoir d'expansion entourant la pompe dans les circuits de la technique antérieure (figure 1) et afin d'éviter la transmission aux échangeurs 104 des ondes de pression pouvant résulter d'une éventuelle réaction sodium/eau dans le générateur de vapeur 106, il est prévu en amont et en aval de la zone d'échange de celui-ci des réservoirs tampons qui sont disposés conformément à l'invention aussi près que possible de cette zone d'échange afin de ne pas créer d'oscillations de grande amplitude à la suite de tels chocs.

De façon connue, le réservoir tampon amont 144 est constitué par la poche de gaz inerte 168 enfermée dans le dôme de l'enveloppe 150 du générateur de vapeur, au-dessus du niveau libre de sodium N'. A cet effet, la hauteur de la poche d'argon est calculée de façon à pouvoir amortir le choc résultant d'une réaction sodium/eau dans le générateur de vapeur.

Conformément à l'invention, le réservoir tampon aval 145 est également disposé à l'intérieur de l'enveloppe 150 du générateur de vapeur, entre la zone d'échange proprement dite et la tubulure de sortie 166. Ce réservoir tampon 145 présente de plus une forme annulaire, de telle sorte que le sodium liquide s'écoule vers le bas à l'intérieur de sa cloison interne. Cette configuration annulaire du réservoir 145 confère au sodium à l'intérieur de ce réservoir une grande surface libre. Il en résulte que les variations du niveau de sodium dans le réservoir tampon aval sont relativement limitées lorsque des ondes de pression sont produites par une réaction sodium/eau à l'intérieur du générateur de vapeur. L'amortissement des ondes de pression peut ainsi être réalisé sur une hauteur relativement limitée du générateur de vapeur, aussi bien à l'amont qu'à l'aval de celui-ci. Cette caractéristique est essentielle car elle permet de réaliser cet amortissement à un niveau du générateur distinct de celui auquel se trouvent les lyres de dilatation des tubes 169. Il est ainsi possible d'éviter l'entrée en vibration de ces tubes et le risque de rupture qui en résulte.

En complément aux réservoirs tampons amont et aval, on prévoit de façon conventionnelle d'évacuer les produits résultant d'une éventuelle réaction sodium/eau dans le générateur de vapeur. A cet effet, une canalisation 130 relie le générateur de vapeur à la partie supérieure du réservoir de stockage 124 qui joue alors le rôle de séparateur entre les produits liquides et gazeux. Cette canalisation 130 est normalement obturée par des membranes de grande section 128 qui se rompent en cas de surpression. Dans l'hypothèse où le réservoir 124 serait insuffisant pour effectuer la séparation des effluents liquides et gazeux, on prévoit en outre de relier la partie supérieure de celui-ci à un séparateur 132 par une canalisation 131. Les effluents gazeux sortant du séparateur 132 sont évacués dans l'atmosphère par une cheminée 134. Au contraire, les effluents liquides redescendent dans le réservoir 124.

Une membrane 167 permet de maintenir sous gaz neutre la cheminée 134 et le séparateur 132.

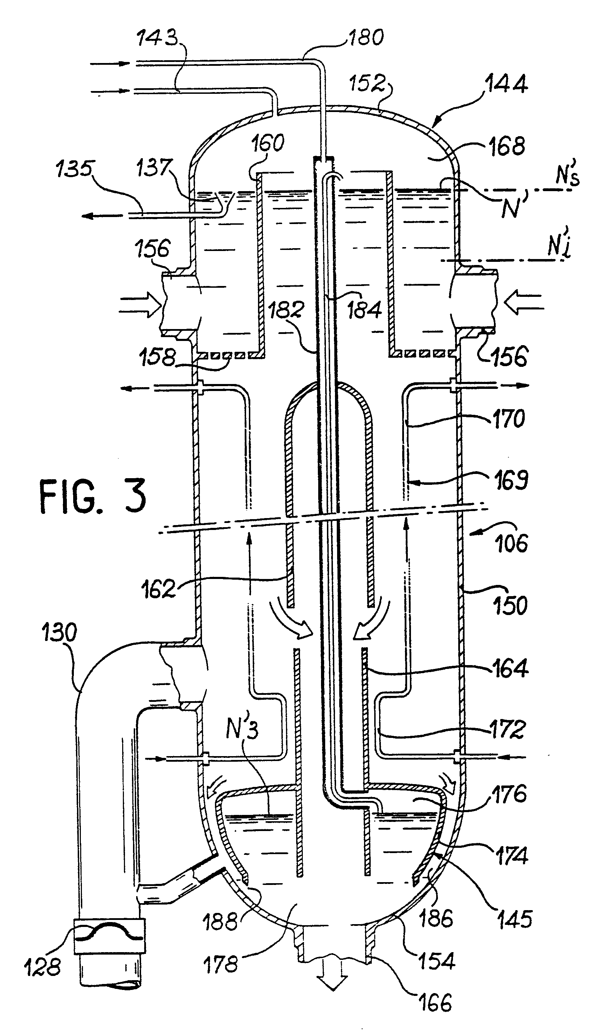

A titre d'exemples, on a représenté plus en détails sur les figures 3 à 6 différents modes de réalisation du générateur de vapeur 106 selon l'invention.

Ainsi, on voit sur la figure 3 un générateur de vapeur 106 comportant une enveloppe cylindrique 150, d'axe vertical, obturée à son extrémité supérieure par un dôme 152 et à son extrémité inférieure par un fond 154. L'entrée du sodium secondaire s'effectue latéralement à la partie supérieure de l'enveloppe 150 par une ou plusieurs tubulures 156 (selon qu'il existe un ou plusieurs échangeurs 104 dans la boucle secondaire).

Le sodium pénétrant dans le générateur est dévié vers le bas au travers d'une grille de répartition 158 par une virole 160 disposée coaxialement à l'enveloppe 150 en face des tubulures 156. Le sodium secondaire s'écoule ainsi de haut en bas dans un espace annulaire ménagé entre l'enveloppe cylindrique 150 et un noyau central 162 disposé coaxialement à l'intérieur de l'enveloppe. Le sodium pénètre ensuite dans une virole 164 disposée en dessous du noyau 162, également coaxialement à l'enveloppe 150, pour ressortir du générateur de vapeur par une tubulure de sortie 166 qui s'ouvre dans le fond 154 de l'enveloppe, selon l'axe vertical de cette dernière, c'est-à-dire dans le prolongement de la virole 164.

Le générateur de vapeur 106 de la figure 3 comporte en outre un faisceau de tubes 169 dans lequel circule l'eau du circuit tertiaire eau-vapeur. Chacun des tubes 169 comporte une partie hélicoïdale 170 disposée dans l'espace annulaire défini entre l'enveloppe 150 et le noyau central 162. Cette partie des tubes baigne dans le sodium liquide secondaire qui s'écoule de haut en bas entre la grille 158 et la virole 164. Elle définit donc la zone d'échange proprement dite du générateur de vapeur, dans laquelle la chaleur véhiculée par le sodium secondaire est transmise à l'eau du circuit tertiaire, ce qui a pour effet de la transformer en vapeur surchauffée.

Chaque tube 169 du faisceau comporte, en dessous de sa zone d'échange thermique hélicoïdale 170, une partie 172 en forme de lyre de dilatation. Cette partie 172 est disposée dans l'espace annulaire défini entre l'enveloppe 150 et la virole 164, c'est-à-dire en dehors de la zone d'écoulement du sodium secondaire. Elle ne fait donc pas partie de la zone d'échange proprement dite du générateur de vapeur.

Afin de faciliter l'échange thermique entre le sodium secondaire et l'eau tertiaire et la vaporisation de cette dernière, l'eau circule de bas en haut dans les tubes 169, à contre courant par rapport au sodium.

Comme on l'a mentionné précédemment, le réservoir tampon amont 144 est constitué par une poche d'argon 168 remplissant le dome 152 de l'enveloppe du générateur, pour définir dans des conditions normales de fonctionnement un niveau N' de sodium liquide situé au-dessus des tubulures d'entrée 156. Le réservoir 144 est ainsi situé dans la zone d'entrée du sodium liquide à l'intérieur de l'enveloppe 150. Par conséquent, il assure l'amortissement d'ondes de pression produites par une éventuelle réaction sodium/eau dans la zone d'échange, à l'amont de cette zone.

On a vu précédemment que la poche d'argon 168 communique avec la poche d'argon 124a du réservoir de stockage et avec la poche d'argon 112f de la pompe par une canalisation 143. De même, on a vu que le niveau N' du sodium comporte un trop plein 137 relié par une canalisation 135 au réservoir de stockage.

Les variations de volume dues aux transitoires rapides sont compensées par le volume de garde placé dans le haut du générateur de vapeur 106 et par la canalisation de trop plein 135.

Conformément à l'invention, le réservoir tampon aval 145 est également disposé à l'intérieur de l'enveloppe 150 du générateur de vapeur, à un niveau décalé par rapport aux lyres de dilatation 172 des tubes.

A cet effet, dans le mode de réalisation de la figure 3, le réservoir 145 est disposé à la partie inférieure de l'enveloppe 150, en dessous des lyres de dilatation 172. Il est de forme annulaire et situé entre le fond 154 de l'enveloppe et la partie inférieure de la virole 164. De façon plus précise, le réservoir 145 comporte une tôle en forme de cloche 174 fixée de façon étanche à la virole 164, de telle sorte que la tôle 174 définit la paroi supérieure et la paroi latérale externe et que la partie inférieure de la virole 164 définit la paroi latérale interne du réservoir annulaire 145.

Le réservoir 145 ainsi formé est donc étanche à sa partie supérieure, qui est remplie d'une poche d'argon 176. En revanche, l'extrémité inférieure de la virole 164 est espacée d'une certaine distance par rapport au fond 154 de l'enveloppe, de façon à définir un passage 178 par lequel du sodium liquide est admis dans le réservoir 145 jusqu'à un niveau N'3 en dessous de la poche d'argon 176. Le réservoir 145 est ainsi situé dans la zone de sortie du sodium liquide à l'intérieur de l'enveloppe 150. Par conséquent, il assure l'amortissement d'ondes de pression produites par une éventuelle réaction sodium/eau dans la zone d'échange, à l'aval de cette zone.

Grâce aux grandes surfaces des interfaces sodium/argon dans les réservoirs amont 144 et aval 145, on comprend que les niveaux N' et N'3 varient de façon relativement limitée en cas de réaction sodium/eau dans la zone d'échange du générateur. Les poches d'argon assurant l'amortissement des chocs dans les réservoirs 144 et 145 peuvent ainsi être disposées en totalité respectivement au-dessus et en dessous du faisceau de tubes et, par conséquent, des lyres de ce faisceau, de telle sorte que l'amortissement des ondes de pression n'induise pas de chocs importants au niveau du faisceau des tubes et donc des lyres.

Etant donné que le sodium contenu dans le réservoir tampon amont 144 communique avec le sodium contenu dans le réservoir tampon aval et qu'il existe un décalage de plusieurs mètres entre les niveaux N' et N'3, la poche d'argon 176 du réservoir tampon aval doit être à une pression sensiblement supérieure à celle de la poche 168 du réservoir tampon amont. A cet effet, on prévoit de faire communiquer le haut du réservoir 174 avec une canalisation d'arrivée d'argon sous pression 180. Dans le mode de réalisation représenté sur la figure 3, cette canalisation pénètre dans l'enveloppe 150 du générateur de vapeur au travers du dôme 152, selon l'axe de l'enveloppe, et elle débouche dans un tube 182 de plus grande section, qui se prolonge vers le bas suivant l'axe de l'enveloppe au travers du noyau 162 et de la virole 164, pour déboucher latéralement dans le réservoir 145, juste en dessous de la paroi supérieure définie par la tôle 174. La pression d'argon ainsi établie dans le réservoir 145 peut être d'environ 1 bar relatif lorsque la pression d'argon dans le reste du circuit, et notamment dans le réservoir 144 est de 0,5 bar relatif.

Le niveau inférieur N'3 de sodium liquide dans le réservoir 145 est déterminé par un tube de bullage 184 dont l'extrémité inférieure affleure la surface du sodium liquide dans le réservoir tampon aval et dont l'extrémité supérieure débouche dans la poche d'argon 168 du réservoir tampon amont, au-dessus du niveau N' défini par le trop plein 137. Lors de la mise sous pression de la poche d'argon 176 par la canalisation 180, l'argon s'échappe par le tube 184 dans la poche d'argon 168 dès que la surface du sodium liquide dans le réservoir 145 descend au niveau de l'extrémité inférieure du tube 184. Dans le mode de réalisation de la figure 3, le tube 184 est disposé dans le tube 182, de telle sorte que la section de passage de ce dernier reste très petite par rapport à la surface sodium/argon dans le réservoir 145, contrairement à ce qui a été représenté sur la figure pour en améliorer la clarté. L'amortissement d'une onde de pression résultant d'une réaction sodium/eau dans le générateur s'effectue donc sans remontée de sodium dans le tube 182.

Enfin, dans le mode de réalisation représenté sur la figure 3, on voit qu'il existe un passage ou espace annulaire 186 entre la paroi externe du réservoir 145 définie par la tôle 174 et le fond 154 de l'enveloppe. Cette tôle est pendue au corps central 162 autour duquel peuvent être enroulés en hélice les faisceaux de tubes 169. Il s'établit ainsi un léger courant dérivé de sodium secondaire dans l'espace 186 et, par conséquent, dans l'espace annulaire entourant la virole 164 au-dessus du réservoir 145 et contenant les lyres de dilatation 172, comme l'indiquent les flèches sur la figure 3.

On voit aussi sur la figure 3 la conduite 130 équipée des membranes d'éclatement 128.

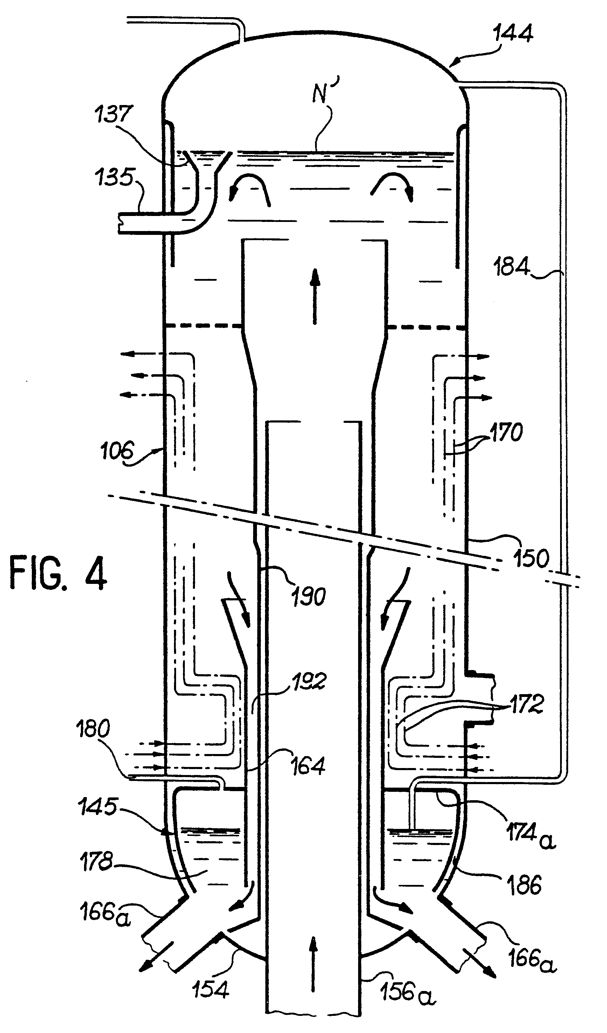

Les autres modes de réalisation de générateurs de vapeur représentés sur les figures 4 à 6 sont identiques à celui qui vient d'être décrit, à l'exception des points suivants :

Sur la figure 4, l'entrée du sodium secondaire s'effectue par le bas du générateur au moyen d'une tubulure d'entrée 156a traversant le fond 154 de l'enveloppe 150 selon l'axe de cette dernière. La tubulure 156a se prolonge à l'intérieur du générateur par une cheminée verticale 190 évasée à son extrémité supérieure qui débouche sensiblement en dessous du niveau N' du sodium défini dans le réservoir tampon amont 144 par le trop plein 137. Après s'être écoulé de bas en haut à l'intérieur de la cheminée 190, le sodium redescend ensuite dans l'espace annulaire défini entre cette cheminée et l'enveloppe 150. A ce niveau, et comme dans le mode de réalisation précédent, il communique une partie de la chaleur qu'il véhicule à l'eau circulant de bas en haut dans le zone d'échange thermique hélicoïdale 170 des tubes. Il pénètre ensuite dans un espace annulaire de section réduite 192 défini entre la cheminée 190 et la virole 164, pour s'écouler vers le bas jusqu'à des tubulures de sortie 166a disposées en oblique dans le fond 154 de l'enveloppe. Comme dans le mode de réalisation précédent, la virole 164 s'étend sur toute la hauteur des lyres de dilatation 172 et elle se prolonge en dessous de la paroi supérieure horizontale du réservoir 145, formée par une tôle 174a, pour définir la paroi interne de ce réservoir annulaire.

L'extrémité inférieure de la virole 164 est située à une certaine distance du fond 154, à la fois pour permettre l'écoulement du sodium vers les tubulures de sortie 166a et pour mettre en communication le fond du réservoir 145 avec ce sodium en écoulement.

Cette disposition permet de réduire la longueur de la tuyauterie aller 108, puisque généralement la partie inférieure du générateur de vapeur 106 est sensiblement au même niveau que la partie supérieure des échangeurs 104, ce qui, pour des raisons pratiques de présentation, n'est pas schématisé sur la figure 2. Cette même disposition permet également, en rendant libre la partie supérieure du générateur de vapeur 106, de dissocier les fréquences propres de ce dernier de celles transmises à la conduite 108, en cas de séisme.

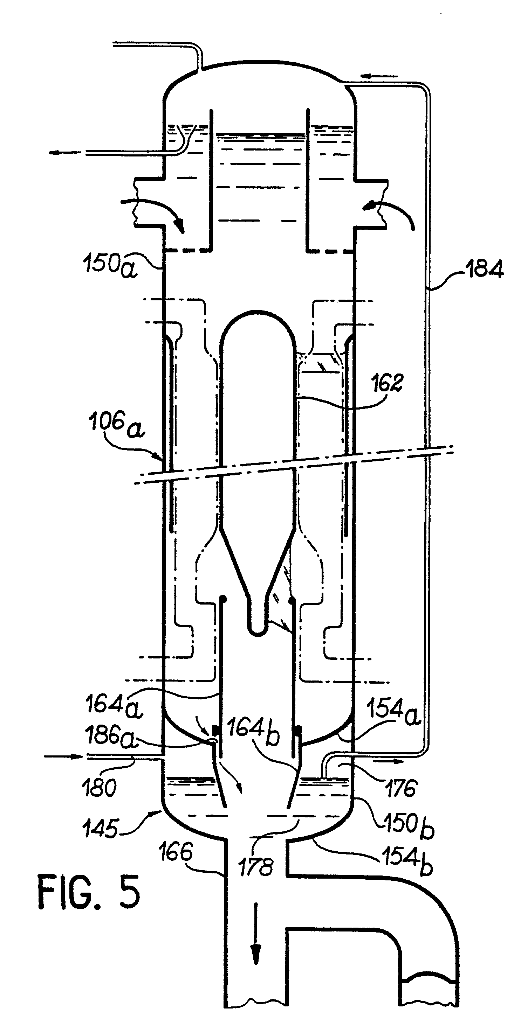

Le générateur de vapeur représenté sur la figure 5 illustre l'application de l'invention à un générateur existant. Ainsi, on voit que dans ce cas, la paroi supérieure du réservoir tampon aval 145 est constituée par le fond 154a d'une première partie 150a de l'enveloppe du générateur, contenant tous les éléments de ce dernier à l'exception du réservoir tampon 145. La paroi latérale externe du réservoir 145 est constituée par une paroi cylindrique 150b prolongeant vers le bas la paroi 150a et présentant également un fond 154b au centre duquel débouche la tubulure de sortie 166. En outre, une virole 164b est rapportée de façon étanche à l'extrémité inférieure de la virole 164a par laquelle le sodium liquide s'écoule vers le bas dans la partie inférieure de la partie 150a de l'enveloppe. Cette virole 164b se prolonge sous le fond 154a et définit ainsi la paroi latérale interne du réservoir 145. Bien entendu, son extrémité inférieure se termine à une certaine distance du fond 154b, pour permettre au sodium contenu dans le réservoir tampon aval de communiquer avec le sodium en écoulement dans la zone de sortie du générateur de vapeur.

Dans ce mode de réalisation, étant donné que la paroi externe du réservoir 145 est constituée par la partie 150b de l'enveloppe, un débit limité de sodium liquide à l'intérieur de l'espace annulaire défini autour de la virole 164a et au-dessus du réservoir 145 est obtenu au moyen de passages 186a formés dans la virole 164a juste au-dessus du fond 154a. Une légère circulation de sodium liquide s'établit ainsi autour des lyres de dilatation.

On voit en outre sur la figure 5 que le tube de bullage 184b ainsi que le tube 180 de mise sous pression de la poche d'argon 176 sont disposés, comme sur la figure 4, à l'extérieur de l'enveloppe du générateur de vapeur.

Bien entendu, ces différents modes de réalisation peuvent encore subir des variantes ou être combinés entre eux sans sortir du cadre de l'invention. Dans tous les cas, on retrouve les avantages résultant de la disposition du réservoir tampon aval à l'intérieur du générateur de vapeur, de la grande surface de l'interface sodium/argon à l'intérieur de ce réservoir et de la disposition de la poche d'argon défini par ce réservoir à un niveau décalé par rapport aux lyres de dilation des tubes. La pompe mécanique 112 décrite en se référant à la figure 2 peut notamment être remplacée par une ou plusieurs pompes d'un autre type, par exemple électromagnétiques, sans sortir du cadre de l'invention.

**Revendications**

1. Circuit caloporteur secondaire de réacteur nucléaire à métal liquide, comprenant au moins un échangeur de chaleur (104) logé dans la cuve (102) du réacteur, un générateur de vapeur vertical (106) extérieur à ladite cuve, une conduite aller (108) reliant une tubulure de sortie de chaque échangeur de chaleur à au moins une tubulure d'entrée (156) du générateur de vapeur, une conduite retour (110a, 110b) reliant au moins une tubulure de sortie (166) du générateur de vapeur à une tubulure d'entrée de chaque échangeur de chaleur, une pompe (112) de circulation d'un métal liquide secondaire contenu dans ledit circuit, disposée dans la conduite retour, un réservoir tampon amont (144) disposé dans ledit circuit en amont de la zone d'échange du générateur de vapeur et un réservoir de stockage (124) du métal liquide secondaire jouant aussi le rôle d'un réservoir tampon aval, disposé en aval de la zone d'échange du générateur de vapeur, le générateur de vapeur comprenant une enveloppe externe (150) à l'intérieur de laquelle est disposé le réservoir tampon amont, ce dernier définissant un premier niveau libre (N') de métal liquide surmonté d'une première poche de gaz neutre (168) au-dessus de la zone d'échange, dans la partie supérieure de l'enveloppe, des moyens (126) étant prévus pour établir une première pression de gaz neutre simultanément dans le réservoir de stockage (124) et dans le réservoir tampon amont (144) caractérisé en ce qu'un réservoir tampon aval est également disposé à l'intérieur de l'enveloppe externe et définit un deuxième niveau libre (N'3) de métal liquide surmonté d'une deuxième poche de gaz neutre (176), ce réservoir tampon aval étant de forme annulaire, et situé en dessous de ladite zone d'échange autour d'une zone de sortie du générateur par laquelle le métal liquide secondaire s'écoule vers le bas entre la zone d'échange et la tubulure de sortie du générateur de vapeur, le réservoir tampon aval communiquant avec ladite zone de sortie, des moyens (180) étant prévus pour établir une seconde pression de gaz neutre au-dessus du niveau libre de métal liquide secondaire dans le réservoir tampon aval (145), cette seconde pression étant supérieure à la première.

2. Circuit selon la revendication 1, caractérisé en ce que la pompe de circulation (112) est une pompe mécanique à aspiration axiale comportant un corps de pompe (112a) et un moteur (112b) commandant la rotation d'un rotor (112c) dans le corps de pompe par l'intermédiaire d'un arbre vertical (112d) traversant une garniture hydraulique (112e) solidaire du corps de pompe, le métal liquide secondaire définissant un niveau libre (N'1) surmonté d'un ciel de gaz neutre (112f) dans la partie du corps de pompe située au-dessus de ladite garniture, ce ciel de gaz neutre étant relié auxdits moyens (126) pour établir la deuxième pression de gaz neutre.

3. Circuit selon la revendication 2, caractérisé en ce qu'il comprend de plus des moyens de régulation du niveau du métal liquide secondaire dans le corps de pompe, ces moyens de régulation comportant une canalisation d'alimentation (120) reliant le réservoir de stockage (124) à la conduite retour (110a) en amont de la pompe, une canalisation d'évacuation (139) reliant un trop plein formé dans le corps de pompe au-dessus de la garniture hydraulique au réservoir de stockage, et des moyens (119) pour faire circuler en permanence le métal liquide secondaire dans lesdites canalisations d'alimentation et d'évacuation, afin de pouvoir fonctionner avec une fuite permanente de métal liquide secondaire au travers de la garniture hydraulique (112e) de la pompe vers le réservoir de stockage.

4. Circuit selon la revendication 3, caractérisé en ce que les moyens (119) sont constitués par une pompe électromagnétique.

5. Circuit selon la revendication 1, caractérisé en ce que la pompe de circulation (112) est une pompe électromagnétique.

6. Générateur de vapeur destiné à être utilisé dans un circuit caloporteur secondaire de réacteur nucléaire à métal liquide, ce générateur étant du type comprenant une enveloppe externe (150) d'axe vertical, au moins une tubulure d'entrée (156) et au moins une tubulure de sortie (166) du métal liquide secondaire, l'espace défini à l'intérieur de l'enveloppe étant divisé en une zone d'entrée de métal liquide communiquant avec la tubulure d'entrée, une zone de sortie de métal liquide communiquant avec la tubulure de sortie et une zone d'échange dans laquelle le métal liquide secondaire circule de haut en bas autour de tubes (169) de circulation d'eau tertiaire entre la zone d'entrée et la zone de sortie, ce générateur comprenant de plus un réservoir tampon amont (144) formé par une première poche de gaz neutre (168) remplissant l'extrémité supérieure de l'enceinte, caractérisé par le fait qu'il comprend de plus un réservoir tampon aval (145), de forme annulaire, situé en dessous de ladite zone d'échange, communiquant avec la zone de sortie par au moins une ouverture (178) formée à l'extrémité inférieure de sa cloison interne, (164, 164b, 196), et dont l'extrémité supérieure étanche est remplie d'une deuxième poche de gaz neutre (176).

7. Générateur selon la revendication 6, caractérisé en ce que la zone de sortie est délimitée à l'intérieur d'une virole (164 ; 164a, 164b) disposée coaxialement dans la partie inférieure de l'enveloppe externe (150, 150b), le réservoir tampon aval (145) étant disposé autour de la virole de telle sorte que la partie inférieure de cette dernière forme la cloison interne de ce réservoir, l'extrémité inférieure de la virole (164, 164b) se terminant à une distance donnée du fond de l'enveloppe pour définir ladite ouverture (178).

8. Générateur selon la revendication 7, caractérisé en ce que la tubulure d'entrée (156) s'ouvre dans la partie supérieure de l'enveloppe et en ce que la tubulure de sortie (166) s'ouvre dans le fond de l'enveloppe, dans le prolongement de ladite virole.

9. Générateur selon la revendication 7, caractérisé en ce que la tubulure d'entrée (156a) s'ouvre dans le fond de l'enveloppe et coaxialement à cette dernière, la zone d'entrée comportant une cheminée centrale (190) communiquant avec la tubulure d'entrée et dans laquelle le métal liquide secondaire circule de bas en haut pour parvenir dans la partie supérieure de l'enveloppe, ladite virole (164) étant disposée autour de la cheminée centrale (190) pour définir avec cette dernière un passage annulaire (192) délimitant la zone de sortie, la tubulure de sortie (166a) s'ouvrant dans le fond de l'enveloppe, de façon décalée par rapport à la tubulure d'entrée.

10. Générateur selon l'une quelconque des revendications 7 à 9, caractérisé en ce qu'un passage annulaire (186) est défini entre la cloison externe du réservoir tampon aval (145) et l'enveloppe (150), de telle sorte qu'une circulation limitée de métal liquide secondaire s'établisse dans l'espace annulaire délimité autour de la virole (164), au-dessus du réservoir tampon aval (145).

11. Générateur selon l'une quelconque des revendications 7 à 9, caractérisé en ce que la virole (164a) comporte au moins un passage (186a) au-dessus de la cloison supérieure du réservoir tampon aval, de telle sorte qu'une circulation limitée de métal liquide secondaire s'établisse dans l'espace annulaire délimité autour de la virole (164a), au-dessus du réservoir tampon aval (145).

**Claims**

1. Secondary heat-exchange circuit of a liquid-metal nuclear reactor, comprising at least one heat exchanger (104), accommodated in the vessel (102) of the reactor, a vertical steam generator (106) outside the said vessel, an outgoing pipeline (108) connecting an outlet connection of each heat exchanger to at least one inlet connection (156) of the steam generator, a return pipeline (110a, 110b) connecting at least one outlet connection (166) of the steam generator to an inlet connection of each heat exchanger, a pump (112) which circulates a secondary liquid metal contained in the said circuit and which is arranged in the return pipeline, an upstream buffer tank (144) arranged in the said circuit upstream of the exchange zone of the steam generator, and a storage tank (124) for the secondary liquid metal, also performing the function of a downstream buffer tank and arranged downstream of the exchange zone of the steam generator, the steam generator having an outer casing (150), inside which is arranged the upstream buffer tank, the latter defining a first free level (N') of liquid metal surmounted by a first pocket of neutral gas (168) above the exchange zone in the upper part of the casing, means (126) being provided to establish a first neutral gas pressure simultaneously in the storage tank (124) and in the upstream buffer tank (144), characterized in that a downstream buffer tank is also arranged inside the outer casing and definies a second free level (N'3) of liquid metal surmounted by a second pocket of neutral gas (176), this downstream buffer tank being of annular shape and located below the said exchange zone round a generator outlet zone, via which the secondary liquid metal flows downwards between the exchange zone and the outlet connection of the steam generator, the downstream buffer tank communicating with the said outlet zone, means (180) being provided to establish a second neutral gas pressure above the free level of secondary liquid metal in the downstream buffer tank (145), this second pressure being higher than the first.

2. Circuit according to Claim 1, characterized in that the circulation pump (112) is a mechanical pump with axial suction, comprising a pump body (112a) and a motor (112b) controlling the rotation of a rotor (112c) in the pump body by means of a vertical shaft (112d) passing through a hydraulic packing device (112e) integral with the pump body, the secondary liquid metal defining a free level (N'1) surmounted by an atmosphere of neutral gas (112f) in the part of the pump body located above the said packing device, this atmosphere of neutral gas being connected to the said means (126) of establishing the second neutral gas pressure.

3. Circuit according to Claim 2, characterized in that it also possesses means of regulating the level of the secondary liquid metal in the pump body, these regulating means comprising a feed pipe (120) connecting the storage tank (124) to the return pipeline (110a) upstream of the pump, a discharge pipe (139) connecting an overflow formed in the pump body above the hydraulic packing device to the storage tank, and means (119) of circulating the secondary liquid metal permanently in the said feed and discharge pipes, in order to make it possible to operate with a permanent leak of secondary liquid metal through the hydraulic packing device (112e) of the pump towards the storage tank.

4. Circuit according to Claim 3, characterized in that the means (119) consist of an electromagnetic pump.

5. Circuit according to Claim 1, characterized in that the circulation pump (112) is an electromagnetic pump.

6. Steam generator intended to be used in a secondary heat exchange circuit of a liquid-metal nuclear reactor, (150) of vertical axis, at least one inlet connection (156) and at least one outlet connection (166) of the secondary liquid metal, the space defined inside the casing being divided into a liquid-metal inlet zone communicating with the inlet connection, a liquid-metal outlet zone communicating with the outlet connection, and an exchange zone in which the secondary liquid metal circulates from top to bottom round tertiary water-circulation tubes (169) between the inlet zone and the outlet zone, this generator also possessing an upstream buffer tank (144) formed by a first pocket of neutral gas (168) filling the upper end of the containment, characterized in that it also possesses a downstream buffer tank (145) of annular shape which is located below the said exchange zone and communicates with the outlet zone via at least one orifice (178) made in the lower end of its inner partition (164, 164b, 196) and the sealed upper end of which is filled with a second pocket of neutral gas (176).

7. Generator according to Claim 6, characterized in that the outlet zone is delimited within a shroud (164 ; 164a, 164b) arranged coaxially in the lower part of the outer casing (150, 150b), the downstream buffer tank (145) being arranged round the shroud, in such a way that the lower part of the latter forms the inner partition of this tank, the lower end of the shroud (164, 164b) terminating at a given distance from the bottom of the casing in order to define the said orifice (178).

8. Generator according to Claim 7, characterized in that the inlet connection (156) opens into the upper part of the casing, and in that the outlet connection (166) opens into the bottom of the casing in the extension of the said shroud.

9. Generator according to Claim 7, characterized in that the inlet connection (156a) opens into the bottom of the casing and coaxially relative to the latter, the inlet zone having a central shaft (190) which communicates with the inlet connection and in which the secondary liquid metal circulates from the bottom upwards to enter the upper part of the casing, the said shroud (164) being arranged round the central shaft (190) in order to define with the latter an annular passage (192) delimiting the outlet zone, the outlet connection (166a) opening into the bottom of the casing in a manner offset relative to the inlet connection.

10. Generator according to any one of Claims 7 to 9, characterized in that an annular passage (186) is defined between the outer partition of the downstream buffer tank (145) and the casing (150) in such a way that limited circulation of secondary liquid metal occurs in the annular space delimited round the shroud (164), above the downstream buffer tank (145).

11. Generator according to any one of Claims 7 to 9, characterized in that the shroud (164a) has at least one passage (186a) above the upper partition of the downstream buffer tank, in such a way that limited circulation of secondary liquid metal occurs in the annular space delimited round the shroud (164a), above the downstream buffer tank (145).

**Patentansprüche**

1. Sekundärer Kühlkreislauf für einen Flüssigmetall-Kernreaktor mit wenigstens einem Wärmetauscher (104), der sich in dem Behälter (102) des Reaktors befindet, einem vertikalen Dampferzeuger (106) außerhalb des Behälters, einer Hinleitung (108), die einen Auslaßstutzen von jedem Wärmetauscher mit wenigstens einem Einlaßstutzen (156) des Dampferzeugers verbindet, einer Rückleitung (110a, 110b), die wenigstens einen Auslaßstutzen (166) des Dampferzeugers mit wenigstens einem Einlaßstutzen von jedem Wärmetauscher verbindet, einer Umlaufpumpe (112) für ein in dem Kreislauf enthaltenes sekundäres Flüssigmetall, die in der Rückleitung angeordnet ist, einem stromaufwärtigen Pufferbehälter (144), der in dem Kreislauf stromaufwärts des Austauschbereiches des Dampferzeugers angeordnet ist, und einem Speicherbehälter (124) für das sekundäre Flüssigmetall, der auch die Rolle eines stromabwärtigen Pufferbehälters spielt und stromabwärts des Austauschbereiches des Dampferzeugers angeordnet ist, wobei der Dampferzeuger einen Außenmantel (150) aufweist, in dessen Innerem der stromaufwärtige Pufferbehälter angeordnet ist, wobei letzterer in dem oberen Abschnitt des Mantels einen ersten, freien Pegel (N') von Flüssigmetall festlegt, über dem sich eine erste Tasche (168) aus neutralem Gas oberhalb des Austauschbereiches befindet, und wobei Mittel (126) vorgesehen sind, um einen ersten Druck des neutralen Gases gleichzeitig in dem Speicherbehälter (124) und in dem stromaufwärtigen Pufferbehälter (144) herzustellen, dadurch gekennzeichnet, daß im Inneren des Außenmantels auch ein stromabwärtiger Pufferbehälter angeordnet ist und einen zweiten, freien Pegel (N'3) von Flüssigmetall festlegt, über dem sich eine zweite Tasche (176) aus neutralem Gas befindet, daß dieser stromabwärtige Pufferbehälter Ringform aufweist und sich unterhalb des Austauschbereiches um einen Austrittsbereich des Generators herum befindet, durch den das sekundäre Flüssigmetall nach unten zwischen dem Austauschbereich und dem Auslaßstutzen des Dampfgenerators strömt, daß der stromabwärtige Pufferbehälter mit dem Auslaßbereich in Verbindung steht, und daß Mittel (180) vorgesehen sind, um einen zweiten Druck des neutralen Gases oberhalb des freien Pegels des sekundären Flüssigmetalls in dem stromabwärtigen Pufferbehälter (145) zu erzeugen, wobei dieser zweite Druck höher als der erste ist.

2. Kreislauf nach Anspruch 1, dadurch gekennzeichnet, daß die Umlaufpumpe (112) eine mechanische Pumpe mit axialem Ansaugen ist, die einen Pumpenkörper (112a) und einen Motor (112b) umfaßt, der die Drehung eines Rotors (112c) in dem Pumpenkörper mittels einer vertikalen Welle (112d) steuert, die eine fest mit dem Pumpenkörper verbundene hydraulische Dichtung (112e) durchquert, und daß das sekundäre Flüssigmetall in dem Abschnitt des Pumpenkörpers, der sich oberhalb der Dichtung befindet, einen freien Pegel (N'1) bestimmt, über dem sich eine Schicht aus neutralem Gas befindet, die mit dem Mittel (126) zum Herstellen des zweiten Drucks von neutralem Gas verbunden ist.

3. Kreislauf nach Anspruch 2, dadurch gekennzeichnet, daß er ferner Steuermittel für den Pegel des sekundären Flüssigmetalls in dem Pumpenkörper aufweist, wobei diese Steuermittel eine Zuführleitung (120), die den Speicherbehälter (124) mit der Rückleitung (110a) stromaufwärts der Pumpe verbindet, eine Abführleitung (139), die einen in dem Pumpenkörper oberhalb der hydraulischen Dichtung gebildeten Überlauf mit dem Speicherbehälter verbindet, und Mittel (119) aufweist, um fortwährend das sekundäre Flüssigmetall in der Zuführleitung und der Abführleitung strömen zu lassen, um mit einem fortlaufenden Leck von sekundärem Flüssigmetall durch die hydraulischer Dichtung (112e) der Pumpe hindurch zu dem Speicherbehälter arbeiten zu können.

4. Kreislauf nach Anspruch 3, dadurch gekennzeichnet, daß die Mittel (119) von einer elektromagnetischen Pumpe gebildet sind.

5. Kreislauf nach Anspruch 1, dadurch gekennzeichnet, daß die Umlaufpumpe (112) eine elektromagnetische Pumpe ist.

6. Dampferzeuger zur Verwendung in einem sekundären Kühlkreislauf bei einem Flüssigmetall-Kernreaktor, wobei dieser Erzeuger von der Art ist, die umfaßt : einen Außenmantel (150) mit vertikaler Achse, wenigstens einen Einlaßstutzen (156) und wenigstens einen Auslaßstutzen (166) für das sekundäre Flüssigmetall, wobei der im Inneren des Mantels festgelegte Raum in einen Eintrittsbereich für das Flüssigmetall, der mit dem Einlaßstutzen in Verbindung steht, einen Auslaßbereich für das Flüssigmetall, der mit dem Auslaßstutzen in Verbindung steht, und einen Austauschbereich unterteilt ist, in dem das sekundäre Flüssigmetall von oben nach unten um Rohrleitungen (169) für einen tertiären Wasserkreislauf zwischen dem Einlaßbereich und dem Auslaßbereich strömt, wobei dieser Erzeuger ferner einen stromaufwärtigen Pufferbehälter (114) aufweist, der von einer ersten Tasche (168) von neutralem Gas gebildet ist, die das obere Ende des Raumes füllt, dadurch gekennzeichnet, daß der Erzeuger ferner einen ringförmigen, stromabwärtigen Pufferbehälter (145) umfaßt, der sich unterhalb des Austauschbereiches befindet und mit dem Auslaßbereich über wenigstens eine Öffnung (178) in Verbindung steht, die am unteren Ende seiner Innenwand (164, 164b, 196) ausgebildet ist, und wobei das obere, dichte Ende des Behälters mit einer zweiten Tasche (176) aus neutralem Gas gefüllt ist.

7. Erzeuger nach Anspruch 6, dadurch gekennzeichnet, daß der Auslaßbereich im Inneren einer Hülse (164, 164a, 164b) begrenzt ist, die koaxial in dem unteren Abschnitt des Außenmantels (150, 150b) angeordnet ist, daß der stromaufwärtige Pufferbehälter (145) um die Hülse herum derart angeordnet ist, daß der untere Abschnitt dieser letzteren die Innenwand dieses Behälters bildet und daß das untere Ende der Hülse (164, 164b) mit einem vorgegebenen Abstand vom Boden des Mantels endet, um die Öffnung (178) festzulegen.

8. Erzeuger nach Anspruch 7, dadurch gekennzeichnet, daß sich der Einlaßstutzen (156) in den oberen Abschnitt des Mantels öffnet und daß sich der Auslaßstutzen (166) in dem Boden des Mantels in der Verlängerung der Hülse öffnet.

9. Erzeuger nach Anspruch 7, dadurch gekennzeichnet, daß sich der Einlaßstutzen (156a) in dem Boden des Mantels und koaxial zu diesem öffnet, daß der Einlaßbereich einen mittigen Schacht (190) aufweist, der mit dem Einlaßstutzen in Verbindung steht und in dem das sekundäre Flüssigmetall von unten nach oben strömt, um in den oberen Abschnitt des Mantels zu gelangen, daß die Hülse (164) um den mittigen Schacht (190) herum angeordnet ist, um mit diesem einen Ringdurchlaß (192) festzulegen, der den Auslaßbereich begrenzt, und daß sich der Auslaßstutzen (166a) in dem Boden des Mantels in bezug auf den Einlaßstutzen beabstandet öffnet.

10. Generator nach einem der Ansprüche 7 bis 9, dadurch gekennzeichnet, daß ein Ringdurchlaß (186) zwischen der Außenwand des stromabwärtigen Pufferbehälters (145) und dem Mantel (150) derart festgelegt ist, daß sich eine begrenzte Strömung von sekundärem Flüssigmetall in dem um die Hülse (164) herum begrenzten Ringraum oberhalb des stromabwärtigen Pufferbehälters (145) einstellt.

11. Erzeuger nach einem der Ansprüche 7 bis 9, dadurch gekennzeichnet, daß die Hülse (164a) wenigstens einen Durchlaß (186a) oberhalb der oberen Wand des stromaufwärtigen Pufferbehälters der Art aufweist und sich eine begrenzte Strömung von sekundärem Flüssigmetall in dem um die Hülse (164a) herum begrenzten Ringraum oberhalb des stromabwärtigen Pufferbehälters (145) ausbildet.

FIG. 1

0 105 781

FIG. 2

FIG. 3

FIG. 4

FIG. 5